# EUROPEAN PATENT SPECIFICATION

(11) **EP 0 287 083 B1**
(45) Date of publication and mention of the grant of the patent: **10.11.1993**
(21) Application number: 88105907.5
(22) Date of filing: 13.04.1988
(51) Int. Cl.: B32B 15/12

(54) **Foldable metallized paperboard**
Faltbares metallisiertes Papier
Papier métallisé pliable

(30) Priority: 13.04.1987 US 37548
(43) Date of publication of application: 19.10.1988
(73) Proprietor: JAMES RIVER CORPORATION OF VIRGINIA, Richmond, VA 23217 (US)
(72) Inventor: Patterson, Robert, Neenah, WI 54956 (US)
(74) Representative: Schupfner, Gerhard D.

(56) References cited:
- WO-A-82/03202
- GB-A- 2 119 707
- US-A- 4 473 422
- US-A- 4 629 640

## Description

### Field of the Invention

The present invention relates to paperboard laminates that are suitable for use in the manufacture of folding structures such as cartons.

### Description of the Related Art

Those skilled in the art of cellulose-based packaging materials, i.e., paper, paperboard, cardboard, etc., are continuously searching for developments that will enhance the appearance of the packages as well as for those that will improve the functionality thereof. Laminates comprising metallized cellulose-based packaging materials have become very popular as much for their pleasing "high tech" appearance as for their moisture and gas barrier properties. As reported by de Leeuw et al. in US-A-4,250,209, however, the problem of brittleness can be of concern when such metallized packaging materials are being folded.

Friess et al., in US-A-4,171,064, teach one way in which stress cracking that arises during the manufacture of folding cartons from laminates can be reduced. The Friess et al. invention involves applying an additional plastic layer to the seam areas of the cardboard blank. The cartons to which the Friess et al. invention pertain may contain a layer of aluminum foil on the inside. The patent is not, however, concerned with metallized surface packaging. Friess et al. teach applying the plastic seam reinforcement in connection with printing and die cutting the cardboard blank, and then applying the full surface plastic layer to the blank. This rather awkward procedure contrasts with the elegant simplicity of the present invention, wherein paperboard stock is laminated in a single large scale operation. Paperboard carton blanks made from the laminates of the present invention can be used without any subsequent coating procedures.

Techniques for the metallization of paper and board products are in general well known. See for example US-A-3,620,872, 4,153,494, 4,215,170, 4,382,831, 4,473,422, and 4,490,409. US-A-3,980,512 to Rauser generically teaches the transfer of a decorative layer of vacuum-deposited metal from a carrier film to a "second plastic film" which may itself be simultaneously laminated to a more rigid material such as paper, cardboard, or foam plastic. In the Rauser disclosure, it is this "second plastic film" that is packaging material. The paper, cardboard, or foam plastic are added only to make the plastic packaging material more rigid. Rauser does not provide any specific examples of laminates made by this method, nor does he indicate what he means by "plastic" in the "second plastic film". Rauser does not teach that the carrier film must be a nonpolar film such as polyethylene. He also teaches that the metal layer should penetrate into the surface of the "second plastic film".

Furthermore, a metallized plastic film-coated paper laminate for use as a decorative and packaging wrap and for reflective insulation is known from WO-A-8 203 203. As extensible plastic coating resin low density polyethylene is disclosed.

The object of the present invention consists in developing a paperboard laminate having higher adhesion levels and better abrasion resistance.

According to the present invention a paperboard laminate suitable for use in the manufacture of folding structures is provided said laminate comprising
(a) a paperboard support member,
(b) an extensible plastic coating resin of at least 8.9 µm (0.35 mils) thickness adhered to said paperboard support member, and
(c) a metal layer adhered to said extensible plastic coating resin,
wherein the extensible plastic coating resin comprises ethylene acrylic acid copolymers.

The present invention may be described as a paperboard laminate suitable for use in the manufacture of folding structures such as cartons. Said laminate is characterized by good score crack resistance. Said metal layer will preferably be protected against abrasion by a protective coating.

The novel laminates of the present invention may be made by procedures generally mechanically similiar to those suggested by Rauser. The paucity of the specific disclosure in the Rauser patent, however, makes it difficult to determine exactly what the patentee had in mind as the best mode of practising his invention. Where Rauser teaches that the carrier film must be a non-polar plastic such as polyethylene, applicants use an oriented polypropylene or release-coated polyester carrier film (which latter is polar). Applicants' carrier films can be reused many more times than can be the low tensile strength polyethylene carrier film taught by Rauser. Applicants use ethylene acrylic acid copolymer as what Rauser would call the "second plastic film". Rauser does not reveal what he uses. While in the Rauser process the metal layer penetrates into the surface of the "second plastic film", in the practice of the present invention the metal layer does not penetrate the laminating resin. Finally, Rauser teaches the use of paper, cardboard, or foam plastic only as a means of making his plastic packaging material more rigid. Therefore, while the disclosure of the Rauser patent may be consulted for general guidelines on transfer metallization extrusion lamination, those skilled in the art desiring to produce the novel laminates of the present invention should refer to the Description of the Preferred Embodiments below for details on how to prepare them.

### Brief Description of the Drawings

Figure 1 shows a side view of the various layers of a metallized paperboard according to the present invention.

Figure 2 is a schematic representation of a process for preparing the paperboard laminates of the present invention.

### Description of the Preferred Embodiments

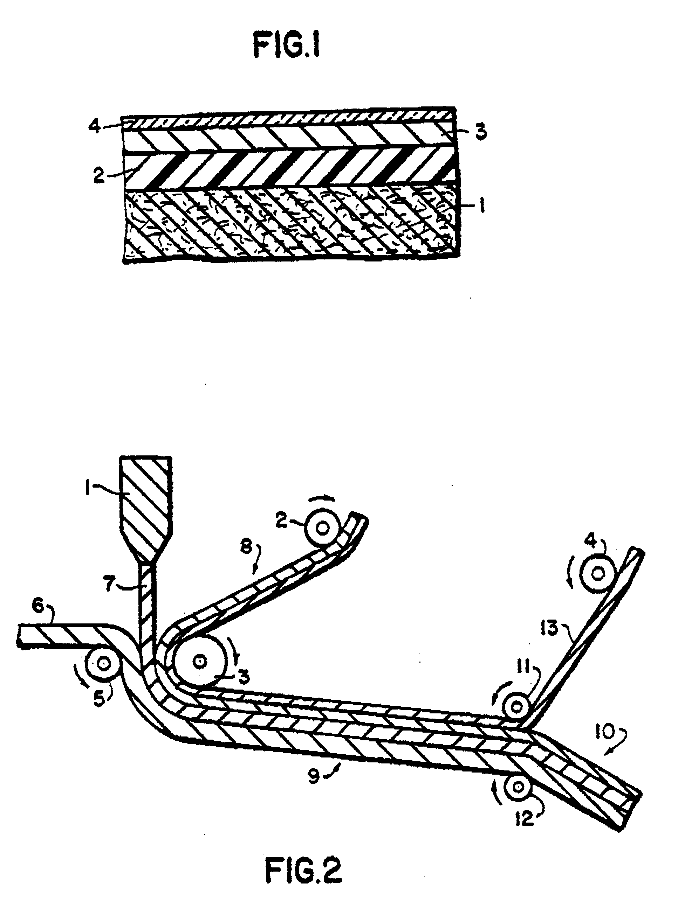

Referring to Figure 1, a paperboard laminate according to this invention includes a paperboard support member 1 having an extensible plastic coating 2. A metal layer 3 adheres to said coating. Said metal layer may be protected by an optional protective coating 4.

The paperboard support member contemplated by the present invention can be any board which, when laminated according to the procedures of the invention, will be characterized by significant score crack resistance. Typical boards include bending chip board, white bar-lined chip board, clay-coated newsback board, solid bleached sulfate board, Bristol board, clay-coated solid bleached sulfate board, unbleached kraft board, clay-coated unbleached kraft board, and cast-coated board. The paperboard support member will generally be of at least 0.2mm (8 mils) thickness in order to permit its use in the manufacture of folding structures such as cartons, point-of-sale displays, etc.

The extensible plastic coating contemplated by the present invention can be any resin that is extrudable and that imparts score crack resistance to the laminate when present in a thickness of at least 8.9 µm (0.35 mils). There is no clear functional upper limit on the thickness of the resin layer, but thicknesses greater than 50.8 µm (2 mils) will ordinarily be too expensive to be commercially desirable . In general, the thinnest layer that gives good score crack resistance will be preferred. As demonstrated below, for a given resin, increased thickness (or greater weight per unit area) tends to increase score crack resistance.

According to the present invention ethylene acrylic acid copolymers, are used as such or in blends with low density polyethylenes, high density polyethylenes, polyvinyl chloride, polyvinylidene chloride, ethylene vinylacetate copolymers, maleic anhydride-modified polyolefins, polymethylpentene, polybutylene, ionomeric resins, and thermoplastic polyesters. In general, the more extensible the resin is, the better a laminate incorporating it will perform. Resin extensibility may be measured by "elongation" stretch testing, wherein elongation percent is defined as 100 times the change in resin sample length at its breaking point divided by the original length of the resin sample. Ethylene acrylic acid copolymers have elongation ratings of greater than 200% when stressed at a rate of 50% per minute,

The metal layer according to the present invention may be aluminum or any other metal generally known to be useful in the metallization of paper and board. Aluminum is currently preferred as being the most economical. Metal thicknesses of from 5 nm (50 Angstroms) through 150 nm (1500 Angstroms) may be used. The thickness of the metallic layer will influence finished product appearance and performance, so the selection of the metallized film will depend on the desired end-use appearance and properties. The barrier properties of the laminate improve continuously with the thickness of the metal layer. Optimum appearance, considering handling, barrier properties, and cost, is obtained with metal films having thicknesses in the range of from 15 (150) through 35 nm (350 Angstroms) thick.

The laminates of the present invention can be made by methods generally known in the art, including direct metallization of the coated board and adhesive transfer. However, the preferred method involves using extrusion lamination equipment modified for film stripping and recovery.

Referring to Figure 2, the extrusion transfer method for making the laminates of the present invention requires a line including an extruder die 1, a secondary unwind 2 from which a vacuum-metallized carrier film 8 is unrolled, a chill roll 3, a secondary rewind 4 upon which the demetallized carrier film 13 is wound up, a backup roll or compression roller 5, and two delamination nip rolls 11 and 12.

In the lamination operation, the vacuum-metallized side of the carrier film 8 is laminated to a paperboard substrate 6 using a molten extrudable polymeric resin 7 in the nip between a chill roll and a backup roll. The molten resin effects a bond between the metal on the vacuum-metallized film and the paperboard substrate being coated. After the laminated structure 9 has cooled sufficiently to assure a durable bond between the substrate and the metallic layer of the metallized film, the film carrier for the metal is delaminated in the delaminating nip between rolls 11 and 12, leaving the metallic coating bonded by the resin to the substrate 10. The demetallized film 13 is rewound so that it can be reused again several times in this transfer metallization process.

The resins as described above can be extruded alone or in blends with one another. Also, as an alternative to extruding a single resin composition to form the extensible plastic coating, multi layer coextrusion procedures can be used. For example, an extensible plastic coating that will impart good barrier properties to the laminate can be produced by coextruding low density polyethylene, ethylene acrylic acid copolymers, and ethylene vinyl alcohol resins.

In the extrusion transfer process the metallized film is laminated to the paperboard substrate between a backing roll and a chill roll. Due to the low thickness of the film, the finish on the chill roll will influence the appearance of the metal on the metallized paperboard substrate. If glossy reflective high distinctness-of-image surfaces are desired, a highly finished chill roll can be used.

Since the metal layer on the transfer film is very thin, the surface finish of the paperboard substrate to be coated will also influence the appearance of the final metallized surface. Rough surfaces tend to have a pebbly diffused look while extremely smooth surfaces have a glossy mirror-like appearance. Consequently the end use application of the substrate will dictate what paperboard substrates should be used.

The metallized surface of the transfer metallized substrate has low abrasion resistance as the metal layer is not penetrated by the laminating resin. The abrasion resistance of the metal layer can be influenced by the chemical properties of the extruded resin. Ethylene acrylic acid copolymers will lead to higher adhesion levels and better abrasion resistance.

An extensible print size protective coating is desirable to provide abrasion protection for the metallized surface and to allow printing on that surface. If a release-coated polyester film is to be used in the transfer metallization process, the release coating will transfer along with the metal. This release coating protects the metal surface from scuffing and provides printability. If a nonrelease-coated film is to be used, the bare metal surface should be coated with printable size coating in line with the film stripping operation. Thermal drying, ultraviolet cure, or electron beam (EB) cure coatings can be used. Polyurethane coatings have been found to give good results.

The practical examples that follow demonstrate the influence on score crack resistance of resin composition and thickness in paperboard laminates according to the present invention.

In order to determine Boxboard Research and Development Association (BRDA) Score Fracture Propensity, a transfer metallized board is scored using a score tester, folded rapidly to simulate machine folding, and examined microscopically to detect fractures in the folded score area. The narrowest score then without fracture defines Score Fracture Propensity. The lower the scoring number the more score crack resistant the sample. Conversely the higher the number the greater the susceptibility to fracture. Therefore "1.0" is the best rating while "6.0" is the poorest. The conditions of scoring are shown in TAPPI method T495 om-82. Samples are scored in both the cross direction and the machine direction and then rated from 1 to 6. The geometric mean Score Fracture Propensity is reported.

The Fold Fracture Propensity of a transfer metallized board is determined using the MIT fold apparatus described in TAPPI method T511 su-69. In this test, an unscored sample is folded through one cycle of the fold tester. The sample is double folded through a 135° angle on either side of a starting point. The double fold is done under a tensile load of 1 kilogram. After folding, the sample is examined microscopically for fractures in the fold area. If no fractures are found the sample is rated "1.0" and if complete fracturing is found the sample is rated "6.0". The scale is not linear, so that the severity of fracture increases rapidly as the rating proceeds from 1 through 6.

### EXAMPLE 1

Practical examples that illustrate the importance of resin composition on product performance can be made by transfer metallizing clay-coated news back (CCNB) board with either Primacor® 3440 ethylene acrylic acid copolymer resin ("EAA"), Norchem® 1017 low density polyethylene ("LDPE"), or Norchem® 1105 high density polyethylene ("HDPE"). Oriented polypropylene film metallized with 9.3 nm (93 Angstroms) of aluminum was laminated with 22.0 grams per square meter of each of the above noted resins to 0.53mm (21 mils) thick CCNB board. For comparison, oriented polypropylene film metallized with 9.3 nm (93 Angstroms) of aluminum was laminated with 8.1 grams per square meter of a relatively nonextensible (i.e. brittle) EB-cure urethane acrylate oligomer ("URAC"). After the resin was set sufficiently to effect a bond with the metal on the film, the film was stripped away leaving a metal-surfaced board. The transfer-metallized boards were then evaluated using both the TAPPI score test T495 om-82 and the TAPPI fold fracture resistance test T511 su-69. The test results are tabulated below.

| Resin | Elongation | Score Fracture Propensity | Fold Fracture Propensity |
|---|---|---|---|
| EAA | 356% | 1.0 | 1.0 |
| LDPE | 159% | 1.1 | 2.1 |
| HDPE | 22% | 1.2 | 3.8 |
| URAC | 11% | 6.0 | 6.0 |

### EXAMPLE 2

Practical examples of the effect resin composition and thickness have on Score Crack Propensity and Fold Fracture Propensity can be made by transferring 9.3 nm (93 Angstroms) of aluminum to bending chip (BC) board using resins that have a range of physical properties. Vacuum-deposited aluminum was transferred to 0.53 mm (21 mils) thick BC board using either Primacor® 3440 ethylene acrylic acid copolymer resin, Norchem® 1017 low density polyethylene, Norchem® 1105 high density polyethylene, polyvinyl acetate ("PVAC"), or a an EB-cure urethane acrylate oligomer.

The metallized boards were scored using a BRDA score tester or an MIT fold endurance tester. After bending and folding, the metallized surfaces were microscopically examined for fracture. The results tabulated below confirm that resin type influences the Score Fracture Propensity and Fold Fracture Propensity of paperboard. The results also demonstrate that increasing resin thickness affects fracture propensity. Note that resin thickness is expressed in the Table in terms of resin weight per unit area.

| Score Fracture Propensity | Fold Fracture Propensity | Resin | Weight |
|---|---|---|---|
| 1.0 | 1.0 | EAA | 19.7 g/m² |
| 2.8 | 1.0 | LDPE | 24.4 g/m² |
| 3.2 | 2.0 | HDPE | 29.3 g/m² |
| 3.5 | 3.0 | HDPE | 14.7 g/m² |
| 4.2 | 5.0 | LDPE | 11.4 g/m² |
| 6.0 | 6.0 | URAC | 8.1 g/m² |
| 6.0 | 6.0 | PVAC | NA |

### EXAMPLE 3

The relationship between the resin elongation rating, resin weight used, and Score Fracture Propensity can be seen in the following Table, which indicates the weights per unit area necessary for various resins to give a Score Fracture Propensity of 25.4 on 533.4 µm (1.0 on 21 mils) thick bending chip board.

| Score Fracture Propensity | Resin | Elongation | Weight |
|---|---|---|---|
| 1.0 | EAA | 356% | 10 g/m² |
| 1.0 | LDPE | 159% | 43 g/m² |
| 1.0 | HDPE | 22% | 137 g/m² |

### EXAMPLE 4

Score Fracture Propensities for various laminates prepared as in Examples 1 and 2 are given in the Table that follows. The paperboard substrates are bending chip, referred to in the Table as "BC", and clay-coated news back, referred to in the Table as "CCNB". The data in this table are ordered by ascending thickness of the plastic coating resin layer in the metallized paperboard laminates.

| Resin | Thickness | Board | Score Fracture Propensity |
|---|---|---|---|
| URAC | 7.62 µm ( .30 mils) | BC | 6.0 |
| URAC | 7.62 µm ( .30 mils) | CCNB | 6.0 |
| LDPE | 12.45 µm ( .49 mils) | BC | 4.2 |
| HDPE | 15.5 µm ( .61 mils) | BC | 3.5 |
| EAA | 20.8 µm ( .82 mils) | BC | 1.0 |
| HDPE | 23.1 µm ( .91 mils) | CCNB | 1.2 |
| EAA | 23.4 µm ( .92 mils) | CCNB | 1.0 |
| LDPE | 23.9 µm ( .94 mils) | CCNB | 1.1 |
| LDPE | 26.4 µm (1.04 mils) | BC | 2.8 |
| HDPE | 31 µm (1.22 mils) | BC | 3.2 |

## Claims

1. A paperboard laminate suitable for use in the manufacture of folding structures, said laminate comprising
(a) a paperboard support member,
(b) an extensible plastic coating resin of at least 8.9 µm thickness adhered to said paperboard support member, and
(c) a metal layer adhered to said extensible plastic coating resin,
wherein the extensible plastic coating resin comprises ethylene acrylic acid copolymers.

2. A laminate according to claim 1 further comprising (d) a protective coating adhered to said metal layer.

3. A laminate according to claim 1 or 2 wherein the extensible plastic coating comprises a resin that has an elongation rating of at least 100 %, preferably of at least 200 % when stressed at a rate of 50 % per minute.

4. A laminate according to any of claims 1 to 3 having a Score Fracture Propensity of less than 4, preferably of less than 2.

5. A laminate according to any of claims 1 to 4 wherein said metal layer consists of aluminum.

6. A laminate according to any of claims 1 to 5 wherein said extensible plastic coating has a thickness in the range of from 8.9 through 50.8 µm, and said layer of aluminum has a thickness in the range of from 5 through 150 nm, preferably of from 15 through 35 nm.

7. A laminate according to any of claims 2 to 6 wherein said protective comprises an urethane resin.

8. A laminate according to any of the preceding claims wherein the extensible plastic coating resin consists of ethylene acrylic acid copolymers coextruded with low density polyethylene and ethylene vinyl alcohol resins.

## Patentansprüche

1. Kartonlaminat, das zur Verwendung bei der Herstellung von Faltkonstruktionen geeignet ist, wobei das Laminat folgendes aufweist:
(a) ein Kartonstützelement,
(b) ein dehnbares Beschichtungskunstharz einer Dicke von mindestens 8,9 µm, das haftend auf dem Kartonstützelement vorgesehen ist, und
(c) eine Metallschicht, die haftend auf dem Beschichtungskunstharz vorgesehen ist,
wobei das dehnbare Beschichtungskunstharz Ethylen-Acrylsäure-Copolymere aufweist.

2. Laminat nach Anspruch 1, das ferner aufweist:
(d) eine Schutzbeschichtung, die haftend auf der Metallschicht vorgesehen ist.

3. Laminat nach Anspruch 1 oder 2, wobei die dehnbare Kunststoffbeschichtung ein Harz aufweist, das einen Dehnungsnennwert von mindestens 100 %, bevorzugt von mindestens 200 %, bei Beanspruchung mit einer Geschwindigkeit von 50 %/min hat.

4. Laminat nach einem der Ansprüche 1-3, das eine Rillbruchneigung von weniger als 4, bevorzugt von weniger als 2 hat.

5. Laminat nach einem der Ansprüche 1-4, wobei die Metallschicht aus Aluminium besteht.

6. Laminat nach einem der Ansprüche 1-5, wobei die dehnbare Kunststoffbeschichtung eine Dicke im Bereich von 8,9 bis 50,8 µm und die Aluminiumschicht eine Dicke im Bereich von 5 bis 150 nm, bevorzugt von 15 bis 35 nm, hat.

7. Laminat nach einem der Ansprüche 2-6, wobei die Schutzbeschichtung ein Urethanharz aufweist.

8. Laminat nach einem der vorhergehenden Ansprüche, wobei das dehnbare Beschichtungskunstharz aus Ethylen-Acrylsäure-Copolymeren besteht, die mit Polyethylen niedriger Dichte und Ethylen-Vinylalkohol-Harzen koextrudiert sind.

## Revendications

1. Stratifié de carton apte à être utilisé dans la fabrication de structures pliables, ledit stratifié comprenant
(a) un élément de support en carton
(b) une résine de revêtement plastique extensible ayant une épaisseur d'au 8,9 µm, adhérant au support de carton, et
(c) une couche métallique adhérant à la résine de revêtement plastique extensible,
la résine de revêtement plastique extensible comportant des copolymères d'éthylène et d'acide acrylique.

2. Stratifié suivant la revendication 1, comprenant en outre (d) un revêtement protecteur adhérant à ladite couche métallique.

3. Stratifié suivant la revendication 1 ou 2, dans lequel le revêtement plastique extensible comprend une résine qui a un taux d'allongement d'au moins 100 %, de préférence d'au moins 200 %, lorsqu'il est soumis à un effort à une vitesse de 50 % par minute.

4. Stratifié suivant l'une quelconque des revendications 1 à 3, ayant une Tendance à la Rupture avec Entaille inférieure à 4, de préférence inférieure à 2.

5. Stratifié suivant l'une quelconque des revendications 1 à 4, dans lequel la couche métallique consiste en aluminium.

6. Stratifié suivant l'une quelconque des revendications 1 à 5, dans lequel le revêtement plastique extensible à une épaisseur comprise dans la plage de 8,9 à 50,8 µm et la couche d'aluminium a une épaisseur comprise dans la plage de 5 à 150 nm, de préférence de 15 à 35 nm.

7. Stratifié suivant l'une quelconque des revendications 2 à 6, dans lequel le revêtement protecteur comprend une résine d'uréthanne.

8. Stratifié suivant l'une quelconque des revendications précédentes, dans lequel la résine de revêtement plastique extensible est constituée de copolymères éthylène-acide acrylique co-extrudés avec du polyéthylène basse densité et des résines éthylène-alcool vinylique.
